# EUROPEAN PATENT SPECIFICATION

(11) **EP 4 178 018 B1**
(45) Date of publication and mention of the grant of the patent: **25.12.2024**
(21) Application number: 21206418.2
(22) Date of filing: 04.11.2021
(51) Int. Cl.: H01M 50/209, H01M 50/249

(54) **A BATTERY MODULE, A BATTERY PACK, AN ELECTRIC VEHICLE, AND A METHOD FOR ASSEMBLING A BATTERY MODULE**
BATTERIEMODUL, BATTERIEPACK, ELEKTRISCHES FAHRZEUG UND VERFAHREN ZUR MONTAGE EINES BATTERIEMODULS
MODULE DE BATTERIE, BLOC-BATTERIE, VÉHICULE ÉLECTRIQUE ET PROCÉDÉ D'ASSEMBLAGE D'UN MODULE DE BATTERIE

(43) Date of publication of application: 10.05.2023
(73) Proprietor: Samsung SDI Co., Ltd., Yongin-si, Gyeonggi-do 17084 (KR)
(72) Inventor: Kraberger, Gernot, 8010 Graz (AT)
(74) Representative: Gulde & Partner

(56) References cited:
- US-A1- 2016 164 054
- US-A1- 2017 187 015

## Description

### Field of the Disclosure

The present disclosure relates to a battery module for an electric vehicle. The present disclosure also relates to a battery pack comprising the battery module, to an electric vehicle comprising the battery pack, and to a method for assembling a battery module.

### Technological Background

In the recent years, vehicles for transportation of goods and peoples have been developed using electric power as a source for motion. Such an electric vehicle is an automobile that is propelled by an electric motor, using energy stored in rechargeable batteries. An electric vehicle may be solely powered by batteries or may be a form of hybrid vehicle powered by for example a gasoline generator or a hydrogen fuel power cell. Furthermore, the vehicle may include a combination of electric motor and conventional combustion engine. In general, an electric-vehicle battery, EVB, or traction battery is a battery used to power the propulsion of battery electric vehicles, BEVs. Electric-vehicle batteries differ from starting, lighting, and ignition batteries because they are designed to give power over sustained periods of time. A rechargeable or secondary battery differs from a primary battery in that it can be repeatedly charged and discharged, while the latter provides only an irreversible conversion of chemical to electrical energy. Low-capacity rechargeable batteries are used as power supply for small electronic devices, such as cellular phones, notebook computers and camcorders, while high-capacity rechargeable batteries are used as the power supply for electric and hybrid vehicles and the like.

Rechargeable batteries may be used as a battery module formed of a plurality of unit battery cells coupled in series and/or in parallel so as to provide a high energy content, in particular for motor driving of a hybrid vehicle. That is, the battery module is formed by interconnecting the electrode terminals of the plurality of unit battery cells depending on a required amount of power and in order to realize a high-power rechargeable battery.

Battery modules can be constructed either in block design or in modular design. In block designs each battery is coupled to a common current collector structure and a common battery management system and the unit thereof can be arranged in a housing. In modular designs, pluralities of battery cells are connected to form submodules and several submodules are connected to form the battery module. In automotive applications, battery systems often consist of a plurality of battery modules connected in series for providing a desired voltage, or alternatively, cells are directly stacked into the housing without an intermediate module structure. The battery modules may comprise submodules with a plurality of stacked battery cells, each stack comprising cells connected in parallel that are connected in series *(XpYs)* or multiple cells connected in series that are connected in parallel *(XsYp).* Therein, term stacked means that equally or similarly shaped battery cells are brought into contact in a specific order. Typically, a stack can be formed of a plurality of prismatic battery cells, i.e., battery cells having three surfaces that are perpendicular to each other. Therein, the stack is formed by repeatedly arranging one surface a battery cell in contact with, or in thermal contact with but separated by a spacer from, a surface of a neighboring battery cell.

A battery pack is a set of any number of (preferably identical) battery modules. They may be configured in a series, parallel or a mixture of both to deliver the desired voltage, capacity, or power. Components of battery packs include the individual battery modules, and the interconnects, which provide electrical conductivity between them.

The mechanical integration of a battery module requires appropriate mechanical connections between the individual components, e.g. between battery cells. These connections must be functional, in particular with respect to heat conductance, and safe during the average service life of the battery system. Further, installation space and interchangeability requirements must be met, especially in mobile applications.

Exothermic decomposition of cell components may lead to a so-called thermal runaway. In general, thermal runaway describes a process that is accelerated by increased temperature, in turn releasing energy that further increases temperature. Thermal runaway occurs in situations where an increase in temperature changes the conditions in a way that causes a further increase in temperature, often leading to a destructive result. In rechargeable battery systems, thermal runaway is associated with strongly exothermic reactions that are accelerated by temperature rise. These exothermic reactions can include combustion of flammable gas compositions within the battery pack housing. For example, when a cell is heated above a critical temperature (typically above 150°C) it can transit into a thermal runaway. The initial heating may be caused by a local failure, such as a cell internal short circuit, heating from a defect electrical contact, short circuit to a neighboring cell. During the thermal runaway, a failed battery cell, i.e., a battery cell which has a local failure, may reach a temperature exceeding 700°C. Further, large quantities of hot gas are ejected from inside of the failed battery cell through the venting opening of the cell housing into the battery pack. The main components of the vented gas are H₂, CO₂, CO, electrolyte vapor and other hydrocarbons. The vented gas is therefore burnable and potentially toxic. The vented gas also causes a gas-pressure increase inside the battery pack.

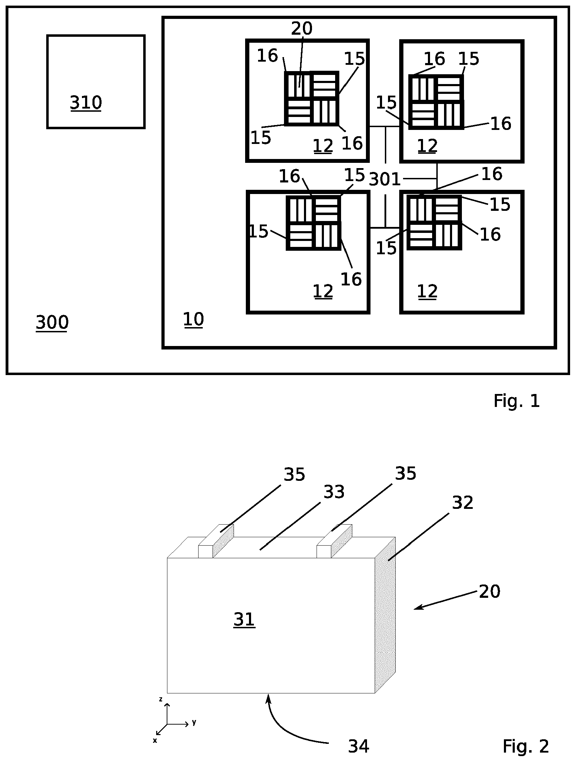

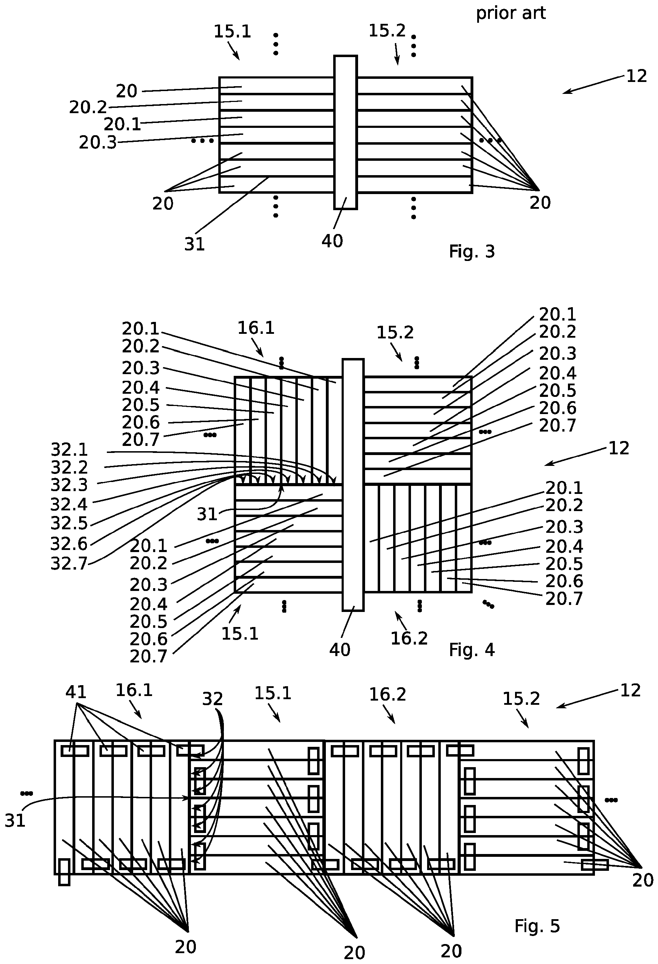

According to the prior art, two typical types of cell integration concepts for prismatic cells into a battery pack are: with a module structure and in a cell-to-pack fashion. The latter can avoid extra interfaces and, thus, extra cost. In either of these arrangements battery cells all are typically oriented in the same way. However, high energy densities of the cells, a high packing density of the cells within the battery pack, and relatively good thermal contact between the cells lead to increased safety issues in case of thermal runaway of at least one cell. When a battery cell goes into thermal runaway, e.g. triggered by overtemperature, overcharging, internal or external short circuit, its stored electrical and chemical energy will be released in a sudden chemical reaction. This leads to a heat-up of the battery cell in thermal runaway to up to 1000°C or more, depending on the energy density (see, e.g., Table 2 in Golubkov et al., RSC Adv., 2015,5, 57171-57186, https://doi.org/10.1039/C5RA05897J). With typical battery cell masses of around 1kg and a heat capacity of roughly 1 kJ/K kg, a heat-up from 0°C to 1000°C corresponds to an energy of 1 MJ. In the conventional arrangement as shown in Fig. 3, typically a battery cell will mostly transfer the heat to its two nearest neighbors, i.e., two battery cells within the battery cell group which are touched via a longitudinal side surface of the battery cell (in its x-direction, see Fig. 2). Assuming adiabatic conditions on all other surfaces (which is a good approximation if there is a good thermal insulation on the other surfaces), each neighbor battery cell gets half of the released energy (500kJ) and consequently heats up by 500°C, which is enough to trigger thermal runaway (this happens at ca. 150-170°C). The propagation continues until all battery cells in the cell stack and/or the battery module have entered thermal runaway. The prior art intends to avoid thermal runaway propagation by, e.g., compartmentalization of battery cells. However, compartmentalization is expensive and takes up a lot of space.

CN 105261807 A discloses an electric vehicle power battery including a box body provided with a partition that divides an inner cavity of the box body into a plurality of battery installation chambers. Battery groups are installed in the installation chambers, wherein the battery cells accommodated in one installation chamber are arranged orthogonally to the battery cells accommodated in the remaining installation chambers, i.e., a plurality of battery cell groups is equally stacked and a single battery cell group is stacked differently. Prevention of thermal runaway could be improved over CN 105261807 A. In US 2016/0164054 A1 a battery module is disclosed in which the cells include a first group including cells stacked along a first direction and a second group including cells stacked along a second direction. The US 2017/0187015 A1 discloses a battery module with first and second cell group which arranged in two stages and where long side faces of the first cell group and the long side faces of the second cell group are perpendicular to each other.

### Summary of Invention

The invention is defined by the appended claims. The description that follows is subjected to this limitation. Any disclosure lying outside the scope of said claims is only intended for illustrative as well as comparative purposes.

According to the invention, a battery module is provided according to claim 1.

According to another aspect of the invention, a battery pack is provided, comprising at least one battery module according to claim 1.

Another aspect of the present disclosure refers to an electric vehicle comprising at least one battery module and/or at least one battery pack according to the invention.

Yet another aspect of the present disclosure refers to a method for assembling a battery module according to claim 10.

Further aspects of the present disclosure could be learned from the dependent claims or the following description.

### Brief Description of the Drawings

Features will become apparent to those of ordinary skill in the art by describing in detail exemplary embodiments with reference to the attached drawings in which:
- Fig. 1: illustrates a schematic view of an electric vehicle according to an embodiment.
- Fig. 2: illustrates a schematic perspective view of a battery cell according to an embodiment of the invention.
- Fig. 3: illustrates a schematic view of a battery module according to prior art.
- Fig. 4: illustrates a schematic view of a battery module according to an embodiment of the invention.
- Fig. 5: illustrates a schematic view of a battery module according to another embodiment of the invention.

### Detailed Description of the Invention

Reference will now be made in detail to embodiments, examples of which are illustrated in the accompanying drawings. Effects and features of the exemplary embodiments, and implementation methods thereof will be described with reference to the accompanying drawings. In the drawings, like reference numerals denote like elements, and redundant descriptions are omitted.

### General Concept

According to one aspect of the present disclosure, a battery module is provided. The battery module comprises a plurality of first battery cell groups and a plurality of second battery cell groups. Each of the battery cell groups is formed by the arrangement of a plurality of battery cells forming the battery cell group. The first battery cell groups and the second battery cell groups are separated from each other by a cell group boundary that defines the spatial domains of the battery cell groups without necessarily being provided by a physical, i.e., mechanical, boundary arrangement. At least one of the first battery cell groups is arranged adjacent to at least one of the second battery cell groups, i.e., at least one of the first battery cell groups is adjacent to at least one of the second battery cells. Thus, said first battery cell and said second battery cell are separated from each other by a cell group boundary, and at least one battery cell of said first battery cell group is in contact with at least one battery of said neighboring second battery cell group. The adjacent arrangement of first battery cell groups and second battery cell groups ensures a thermal contact between adjacently arranged battery cell groups so that heat can be transferred from one battery cell group to its adjacent, i.e., neighboring, battery cell group. Each of the first battery cell groups and each of the second battery cell groups comprises a plurality of stacked prismatic battery cells. I.e., each of the first battery cell groups can also be called a first battery cell stack, and each of the second battery cell groups can also be called a second battery cell stack. Therein, the first battery cell groups and second battery cell groups are alternatingly stacked. I.e., the stacking pattern of each of the first battery cell groups is different than the stacking pattern of each of the second battery groups. The adjacent arrangement of the first and second battery cell groups and the alternating arrangement means that from battery cell group to battery cell group the stacking of battery cells within the battery cell groups varies periodically in a discrete manner. In particular, the battery cells of the first battery cell groups are stacked so that they are oriented differently than the battery cells of the second battery cell groups. The difference in the stacking pattern distinguishes the first battery cell groups from the second battery cell groups. In other words, the battery module comprises different battery cell groups which are distinguishable from each other by their stacking pattern of stacking battery cells, and the different battery cell groups form domains in which the stacking pattern alternates from domain to domain. That is, the battery cell groups are arranged in a checkerboard pattern, wherein sites of the checkerboard are alternatingly occupied by either a battery cell group of the first battery cell groups or by a battery cell group of the second battery cell groups.

The alternating stacking of the first battery cell groups and the second battery cell groups can improve the thermal conductance between battery cells at the cell group boundaries between a first battery cell group and a neighboring second battery cell group. The alternating stacking implies that a battery cell of the first battery cell group is in thermal contact with a plurality of battery cells of a neighboring second battery cell group. Thus, the battery cells of the first battery cell group can transport its thermal energy to the plurality of battery cells of the neighboring second battery cell group which improves heat conduction between battery cell groups and prevents a thermal runaway. The alternating stacking implies that the above holds analogously for a second battery group, i.e., due to the alternating stacking a battery cell of the second battery cell group is in thermal contact with a plurality of battery cells of a neighboring first battery cell group. Thus, the battery cells of the second battery cell group can transport its thermal energy to the plurality of battery cells of the neighboring first battery cell group. Potentially additional thermally isolating spacers between battery cell groups can be dispensed with or can be smaller than in the prior art.

The battery cells of the first battery cell group are oriented orthogonally to the battery cells of the second battery cell group. In other words, the battery cells of the first battery cell group are stacked and arranged to be orthogonal to battery cells of the second battery cell group, i.e., battery cells of the first battery cell group are rotated by 90° against the battery cells of the second battery cell group. This arrangement can improve the effectiveness of avoiding thermal runaway by providing improved thermal contact between neighboring battery cell groups and is particularly space-saving and cost-effective to manufacture. In this arrangement, a battery cell of a first battery cell group contacts, compared with other orientations, a maximal number of battery cells of a second battery cell group which provides an effective heat conductance.

Optionally, each of the first battery cell groups comprises at least one neighboring second battery cell group, wherein each of the neighboring first battery cell groups and second battery cell groups are alternatingly stacked. This provides an alternating arrangement of first battery cell groups and second battery cell groups extending specifically among neighboring battery cell groups. Therein, optionally, at least one of the first battery cell groups comprises at least another one of the first battery cell groups as next-nearest neighbor, wherein said first battery cell group and the next-nearest first battery cell group are stacked in the same manner. For example, the battery module can comprise a one-dimensional arrangement of battery cell groups, wherein battery cell groups are first battery cell groups or second battery cell groups alternatingly.

Optionally, the first battery cell groups and the secondary battery cell groups are arranged on a two-dimensional lattice; wherein the lattice comprises lattice sites arranged in at least two rows and at least two columns. In this embodiment, the term lattice does not refer to a physical structure, e.g., for mounting the battery cell groups. The lattice refers to the arrangement of battery cell groups in a mathematical sense to define that the battery cell groups are arranged in a regular pattern on the lattice sites. Therein, either one of the first battery cell groups or one of the second battery cell groups is arranged on each lattice site. This provides an effective arrangement of battery cell groups in a regular pattern that can improve the mountability of the battery module.

Optionally, the battery module comprises thermally insolating spacers arranged between the battery cell groups. This improve avoiding the thermal runaway further. A spacer might be electrically insolating to improve electrical safety, i.e., to avoid creepage and/or to provide electrical clearance.

The first battery cell groups and the second battery cell groups are arranged so that one battery cell of the first battery cell group is arranged to touch a plurality of, or each of, the cells of a neighboring second battery cell group. In this embodiment, the first battery cell group can be arranged so that a battery cell of the first battery cell group and its boundary touches a plurality of, or each of, the cells of a neighboring second battery cell group to achieve improved heat conductance between said battery cell of the first battery group and the neighboring second battery cell group. Each of the battery cells has a narrow side surface and a longitudinal side surface; and the first battery cell groups and the second battery cell groups are arranged so that one battery cell of the first battery cell group is arranged to touch, with its longitudinal side surface, a plurality of, or each of, the cells of a neighboring second battery cell group at their narrow side surfaces.

Optionally, one battery cell of one of the first battery cell groups has a longitudinal side surface that contacts a plurality of narrow side surfaces of battery cells of a neighboring second battery group, wherein the sum of the areas of the narrow side surfaces is less or equal then the area of the longitudinal side surface. This embodiment can improve heat conductance between the battery cell with its longitudinal side surface and the battery cells with their respective narrow side surfaces as the battery cell of the first battery cell group is, or can be brought, in contact with the plurality of battery cells of the second battery cell group.

Optionally, for each of the battery cells, the elongation of a battery cell in a first direction is a integer multiple of the elongation of said battery cell in a second direction. This embodiment allows an efficient arrangement of alternatingly stacked battery cell groups, wherein one battery can contact with its plane surface extending along the first direction a plurality of battery cells of a neighboring battery cell group with their plane surfaces extending along the second direction.

Optionally, each of the battery cells has an equal shape, and/or each of the first and second battery cell groups has an equal shape with a square cross-section. Equally shaped battery cells can provide an efficient stacking of battery cells to form battery groups, and can improve an alternating arrangement of first battery cell groups and second battery cell groups. Equally shaped first battery cell groups and second battery cell groups with a square cross-section each can improve the arrangement of the battery groups in an alternating manner, wherein the equal shape of the battery cell groups and the alternating arrangement leads to a checkerboard pattern with equally-sized square sites on the checkerboard at which battery cell groups are arranged.

Optionally, the number of battery cells comprised by each of the first battery cell groups and the number of battery cells comprised by each of the second battery cell groups equal each other. In this embodiment, the size of each of the first battery cell group and the size of each of the second battery cell groups equal if they comprise the same number of battery cells with the same aspect ratio. This allows an effective arrangement of battery groups.

According to another aspect of the present disclosure, a battery pack is provided. The battery pack comprises at least one battery module as described above. Thus, technical effects and optional features as describe above apply to the battery pack.

Another aspect of the present disclosure refers to an electric vehicle. The electric vehicle comprises at least one battery module as described above and/or at least one battery pack as described above. Thus, technical effects and optional features as describe above apply to the electric vehicle.

Yet another aspect of the present disclosure refers to a method for assembling a battery module according to an aspect of the present disclosure, wherein the method comprises the steps of
a) providing the plurality of first battery cell groups and the plurality of second battery cell groups
b) arranging at least one of the first battery cell groups adjacent to at least one of the second battery cell groups so that the first battery cell groups and second battery cell groups are alternatingly stacked. The battery module that is assembled as describe coincides with the battery module as described above. Thus, technical effects and optional features as describe above apply analogously to the method for assembling.

### Specific Embodiments

Fig. 1 illustrates a schematic view of an electric vehicle 300 according to an embodiment of the invention. The electric vehicle 300 is propelled by an electric motor 310, using energy stored in rechargeable batteries arranged in a battery pack 10. The battery pack 10 is a set of any number of battery modules 12. Rechargeable batteries are used as a battery module 12 formed of a plurality of secondary battery cells 20 (in Fig. 1, only one of the secondary battery cells 20 is indicated with a reference numeral for an illustrative purpose only). Components of the battery pack 10 include the individual battery modules 12, and interconnects 301, which provide electrical conductivity between the battery modules 12.

Each of the battery modules 12 comprises two first battery cell groups 15 and two second battery cell groups 16. The two first battery cell groups 15 and two second battery cell groups 16, and a two-dimensional arrangement of battery cell groups 15, 16 are shown in Fig. 1 only for illustrative purposes. However, each of the battery modules 12 can, depending on the size of the battery cells 20, the aspect ratio of the battery cells 20 and on the number of battery cells 20 within the battery cell groups 15,16, comprise another suitable number of first battery cell groups 15 and/or of second battery cell groups 16 than illustrated in the figures, and the first battery cell groups 15 and the second battery cell groups 16 can be arranged differently than shown in Fig. 1. The battery modules 12 as shown in Fig. 1 are described further with reference to Fig. 4.

Fig. 2 illustrates a schematic perspective view of a battery cell 20 according to prior art. The battery cell 20 is prismatic, i.e., the battery cell 20 comprises three pairs of oppositely arranged and basically flat surfaces that are perpendicular to each other. The battery cells 20 comprises a pair of longitudinal side surfaces 31 (i.e. the largest flat surface of the battery cell 20), a pair of narrow side surfaces 32, and a bottom surface 34. The components together build a sealed case to contain the electrochemical components of the battery cell 20. The opening of the case is tightly sealed with a casing cover 33 with a pair of battery connectors 35 at its top.

As shown in Figs. 4 and 5 and explained with reference thereto, battery cells 20 are arranged so that the longitudinal side surface 31 contacts the longitudinal side surface 31 of a neighboring battery cell 20 within the same battery cell group 15.1, 15.2, 16.1, 16.2 or so that the longitudinal side surface 31 contacts the plurality of smaller flat surfaces, e.g., the narrow side surfaces 32, of a plurality of battery cells 20 of a neighboring battery cell group 15.1, 15.2, 16.1, 16.2. The sum of the areas of the narrow side surfaces 32 is less than or equal to the area of the longitudinal side surface 31.

As shown in Fig. 2, the battery cell 20 comprises electrical connectors 35 to electrically interconnect the battery cell 20 with, e.g., another battery cell 20 and/or a battery management module, e.g., via one or more a current collector structures, e.g., busbars 41 (see Fig. 5), that are electrically connected to the electrical connectors 35.

Fig. 3 illustrates a schematic view of a battery module 12 according to prior art. The exemplary battery module 12 comprises two battery cell groups 15.1 and 15.2, each with a plurality of battery cells 20 being stacked onto each other. High energy densities of the battery cells 20 and a high packing density of the battery cells 20 within the module 12 in thermal contact between the battery cells 20 lead to increased safety issues in case of thermal runaway. If the battery cell 20.1 goes into thermal runaway, this leads to a heat-up of said battery cell 20.1 in thermal runaway and said battery cell 20.1 transfers the heat to its two nearest neighbors, i.e., two battery cells 20.2, 20.3 within the battery cell group 15.1 or 15.2 which are touched via a longitudinal side surface 31 of the battery cell 20.1 (in its x-direction, see Fig. 2). Each neighboring battery cell 20.2, 20.3 gets half of the released energy and consequently heats up, which is enough to trigger thermal runaway. The propagation continues until all battery cells 20 in the cell stack, i.e., the cell group 15.1 or 15.2. The battery module 12 comprises a cross-beam 40 as a part of a supporting structure of the battery module 12. The cross-beam 40 leads to a compartmentalization of the battery module 12, i.e., a plurality of chambers is formed in which the battery groups 15 are arranged. By using suitable measures, it may be prevented that the thermal runaway spreads across the cross-beam 40 throughout the entire battery module 12. However, in principle, the thermal runaway may also propagate across the cross-beam 40 from one of the two battery cell groups 15.1 to the other cell group 15.2. To achieve a compartmentalization also in the stacking direction in the conventional arrangement, spacers are typically used in the stacking direction. A sufficiently thick spacer, e.g., every seventh cell would lead to a similar compartmentalization as shown the arrangement in Figure 1.

The dots indicate that the battery module 12 can comprise more battery cells 20 than illustrated in Fig. 3. Any number of battery cells 20 can be comprised by the battery module 12.

Fig. 4 illustrates a schematic view of a battery module 12 according to an embodiment of the invention.

The battery module 12 comprises two first battery cell groups 15.1, 15.2 and two second battery cell groups 16.1, 16.2. Each of the first battery cell groups 15.1, 15.2 and each of the second battery cell groups 16.1, 16.2 comprises a plurality of stacked prismatic battery cells 20.1, 20.2, 20.3, 20.4, 20.5, 20.6, 20.7. The dots indicate that the battery module 12 can comprise more battery cell groups 15.1, 15.2, 16.1, 16.2 than illustrated in Fig. 4. Also the number of battery cells 20.1, 20.2, 20.3, 20.4, 20.5, 20.6, 20.7 can be different than illustrated. Any suitable number of battery cells 20.1, 20.2, 20.3, 20.4, 20.5, 20.6, 20.7 and/or battery cell groups 15.1, 15.2, 16.1 16.2 can be comprised by the battery module 12.

The numbers of battery cells 20.1, 20.2, 20.3, 20.4, 20.5, 20.6, 20.7 in any of the first battery cell groups 15.1, 15.2 equal to each other. The numbers of battery cells 20.1, 20.2, 20.3, 20.4, 20.5, 20.6, 20.7 in any of the second battery cell groups 16.1, 16.1 equal to each other. The number of battery cells 20.1, 20.2, 20.3, 20.4, 20.5, 20.6, 20.7 in any of the first battery cell groups 15.1, 15.2 equals the number of battery cells 20.1, 20.2, 20.3, 20.4, 20.5, 20.6, 20.7 in any of the second battery cell groups 16.1, 16.2. Each of the battery cells 20.1, 20.2, 20.3, 20.4, 20.5, 20.6, 20.7 has the same prismatic shape. This enables an effective arrangement of the battery groups 15.1, 15.2, 16.1, 16.2 in the battery module 12.

Each of the first battery cell groups 15.1, 15.2 is arranged adjacent to two second battery cell groups 16.1, 16.2. I.e., each one of the first battery cell groups 15.1, 15.2 is arranged side-by-side with the two second battery cell groups 16.1, 16.2. In other words, the two first battery cell groups 15.1, 15.2 and the two second battery cell groups 16.1, 16.2 are neighboring battery cell groups 15.1, 15.2, 16.1, 16.2. Similarly, each of the second battery cell groups 16.1, 16.2 is arranged adjacent to two first battery cell groups 15.1, 15.2.

The first battery cell groups 15.1, 15.2 and second battery cell groups 161., 16.2 are arranged to be alternatingly stacked. The battery cells 20.1, 20.2, 20.3, 20.4, 20.5, 20.6, 20.7 of the first battery cell groups 15.1, 15.2 are oriented orthogonally to the battery cells 20.1, 20.2, 20.3, 20.4, 20.5, 20.6, 20.7 of the second battery cell groups 16.1, 16.2.

The first battery cell groups 15.1, 15.2 and the secondary battery cell groups 16.1, 16.2 are arranged on a two-dimensional lattice, wherein the lattice comprises lattice sites arranged in at least two rows and at least two columns, wherein either one of the first battery cell groups 15.1, 15.2 or one of the second battery cell groups 16.1, 16.2 is arranged on each lattice site. Between two columns, a cross beam 40 is provided that is comprised by the battery module 12. The cross beams 40 can support enduring side-crush loads. Given the expected values for the swelling force that a battery cell 20.1, 20.2, 20.3, 20.4, 20.5, 20.6, 20.7 generates in its x-direction, the necessary strength of the battery cell 20.1, 20.2, 20.3, 20.4, 20.5, 20.6, 20.7 housing in y-direction can be determined; if it is not sufficient in a given battery cell 20.1, 20.2, 20.3, 20.4, 20.5, 20.6, 20.7, additional support structures can be built in. Optionally and not shown in the figures, the battery module 12 comprises at least two cross-beams 40, wherein two cross-beams 40 are arranged orthogonally to each other. This leads to a compartmentalization of the battery module 12 into compartments. Therein, the cross-beams 40 are arranged so that a width of the compartments match the width of the battery cells 20.1, 20.2, 20.3, 20.4, 20.5, 20.6, 20.7. Thus, the battery cells 20.1, 20.2, 20.3, 20.4, 20.5, 20.6, 20.7 are to be stacked perpendicular to the width of the compartments.

The battery module 12 comprises thermally insolating spacers arranged between the battery cell groups 15.1, 15.2, 16.1, 16.2 (not shown in the Figures).

Each of the battery cells 20.1, 20.2, 20.3, 20.4, 20.5, 20.6, 20.7 has a longitudinal side surface 31 and a narrow side surface 32.1, 32.2, 32.3, 32.4, 32.5, 32.6, 32.7 being smaller than the longitudinal side surface 31. Within each of the first battery cell groups 15.1, 15.2 and each of the second battery cell groups 16.1, 16.2, the battery cells 20.1, 20.2, 20.3, 20.4, 20.5, 20.6, 20.7 are stacked so that the longitudinal side surfaces 31 of two contacting battery cells 20.1, 20.2, 20.3, 20.4, 20.5, 20.6, 20.7 touch each other. This allows an efficient stacking of battery cell groups 15.1, 15.2, 16.1, 16.2 and an efficient heat transfer between battery cells 20.1, 20.2, 20.3, 20.4, 20.5, 20.6, 20.7 within the respective battery cell group 15.1, 15.2, 16.1, 16.2. The first battery cell groups 15.1, 15.2 and the second battery cell groups 16.1, 16.2 are arranged so that one battery cell 20.1, 20.2, 20.3, 20.4, 20.5, 20.6, 20.7 of the first battery cell group 15.1, 15.2 is arranged to touch a plurality of, or each of, the cells 20.1, 20.2, 20.3, 20.4, 20.5, 20.6, 20.7 of a neighboring second battery cell group 16.1, 16.2, specifically with their narrow side surfaces 32.1, 32.2, 32.3, 32.4, 32.5, 32.6, 32.7. This allows an efficient heat transfer between battery cells 20 of adjacent battery cell groups 15.1, 15.2, 16.1, 16.2.

The battery cell 20.1, 20.2, 20.3, 20.4, 20.5, 20.6, 20.7 dimensions, i.e., elongation, perpendicular to the x- and y-direction match in the sense that its dimension perpendicular to the x-direction is an integer multiple of the dimension perpendicular to the y-direction (see Fig. 2 for coordinate system). Thus, the surface area of the longitudinal side surface 31 is an integer multiple of the surface area of the narrow side surface 32.1, 32.2, 32.3, 32.4, 32.5, 32.6, 32.7. For contacting the plurality of battery cells 20.1, 20.2, 20.3, 20.4, 20.5, 20.6, 20.7 of the second battery cell group 16.1, 16.2, the longitudinal side surface 31 of the battery cell 20.1 of the first battery cell groups 15.1 contacts a plurality of narrow side surfaces 32.1, 32.2, 32.3, 32.4, 32.5, 32.6, 32.7 of battery cells 20.1, 20.2, 20.3, 20.4, 20.5, 20.6, 20.7 of the neighboring second battery group 16.1. Each of the battery cells 20.1, 20.2, 20.3, 20.4, 20.5, 20.6, 20.7 of the second battery cell group 16.1, 16.2 is arranged so that the narrow side surface 32.1, 32.2, 32.3, 32.4, 32.5, 32.6, 32.7 contacts the longitudinal side surface 31 of the battery cell 20.1 of the first battery cell group 15.1. The sum of the areas of the narrow side surfaces 32.1, 32.2, 32.3, 32.4, 32.5, 32.6, 32.7 is less or equal then the area of the longitudinal side surface 31.

Alternatively, if the battery cell 20.1, 20.2, 20.3, 20.4, 20.5, 20.6, 20.7 dimensions do not match in the above-mentioned sense, additional spacers at the end of the cell stacks or between the battery cells 20.1, 20.2, 20.3, 20.4, 20.5, 20.6, 20.7 can be introduced to enable an effective arrangement of battery cell groups 15.1, 15.2, 16.1, 16.2 in the battery module 12.

Arranging the battery cell groups 15.1, 15.2, 16.1, 16.2 so that they are alternatingly stacked leads to a checkerboard pattern. In case of a thermal runaway each of the battery cells 20.1, 20.2, 20.3, 20.4, 20.5, 20.6, 20.7 within one square, i.e., site, of the checkerboard within one of the battery cell groups 15.1, 15.2, 16.1, 16.2, will likely go into thermal runaway one after the other. However, the last battery cell 20.1, 20.7 being arranged at the boundary of the battery cell group 15.1, 15.2, 16.1, 16.2 will transport its energy, via its longitudinal side surface 31 (perpendicular to the x-direction according to Figure 2), to a plurality of battery cells 20.1, 20.2, 20.3, 20.4, 20.5, 20.6, 20.7 of the neighboring battery cell group 15.1, 15.2, 16.1, 16.2 via their narrow side surfaces 32.1, 32.2, 32.3, 32.4, 32.5, 32.6, 32.7 (perpendicular to the y-direction according to Figure 2), e.g. seven in Fig. 4. By distributing the energy of the thermal runaway to seven cells of the neighboring battery cell group 15.1, 15.2, 16.1, 16.2, each will heat up by for example ca. 143°C, which is safe regarding triggering of thermal runaway.

Each of the first battery cell groups 15.1, 15.2 and each of the second battery cell groups 16.1, 16.2 is illustrated as having a square cross-section. However, it is also possible that the battery cell groups 15.1, 15.2, 16.1, 16.2 have another rectangular cross-section by providing spacers between neighboring battery cell groups 15.1, 15.2, 16.1, 16.2. The prismatic shape of the battery cells 20.1, 20.2, 20.3, 20.4, 20.5, 20.6, 20.7 implies that the battery cell groups 15.1, 15.2, 16.1, 16.2 have a rectangular cross-section or specifically a square cross-section is shown in the figures. Each of the battery cells 20.1, 20.2, 20.3, 20.4, 20.5, 20.6, 20.7 has an equal shape, and each of the first and second battery cell groups 15.1, 15.2, 16.1, 16.2 has an equal shape with a square cross-section.

Fig. 5 illustrates a schematic view of a battery module 12 according to another embodiment of the invention. The embodiment of Fig. 5 will be explained with reference to the embodiment of Fig. 4, wherein the differences are explained. In Fig.5, it is referred to battery cells 20 and to narrow side surfaces 32, if appropriate.

Each of the first battery cell groups 15.1, 15.2 comprises at least another one of the first battery cell groups 15.1, 15.2 as next-nearest neighbor, wherein said first battery cell group 15.1 and the next-nearest neighboring first battery cell group 15.2 are stacked in the same manner. One of the second battery cell groups 16.1, 16.2 is arranged between any pair of next nearest neighboring first battery cell groups 15.1, 15.2.

The battery module 12 comprises busbars 41 which are depicted for illustrative purpose to electrically interconnect the battery cells 20 of the battery cell groups 15.1, 15.2, 16.1, 16.2, and to electrically interconnect the battery cell groups 15.1, 15.2, 16.1, 16.2. The busbars 41 are connected to the battery cell connectors 35 of the battery cells 20. In another embodiment, other current collector structures can be provided. Fig. 5 shows an exemplary busbar layout for part of a cell stack.

In this embodiment, the battery cell groups 15.1, 15.2, 16.1, 16.2 are arranged on lattice sites of a one-dimensional lattice, i.e., battery cell groups 15.1, 15.2, 16.1, 16.2 form a one-dimensional checkerboard pattern and are alternatingly arranged on the lattice sites of the one-dimensional lattice.

The dots indicate that the battery module 12 can comprise more battery cells 20 and/or more battery cell groups 15.1, 15.2, 16.1, 16.2 than illustrated in Fig. 5. Any number of battery cells 20 and/or battery cell groups 15.1, 15.2, 16.1, 16.2 can be comprised by the battery module 12.

### Reference signs

10 battery pack
12 battery module
15, 15.1, 15.2 first battery cell group
16, 16.1, 16.2 second battery cell group
20, 20.1, 20.2, 20.3, 20.4, 20.5, 20.6, 20.7 battery cell
31 longitudinal side surface
32, 32.1, 32.2, 32.3, 32.4, 32.5, 32.6, 32.7 narrow side surface
33 casing cover
34 bottom surface
35 battery cell connector
40 cross-beam
41 busbar
300 vehicle
301 interconnects
310 motor

## Claims

1. A battery module (12), comprising
- a plurality of first battery cell groups (15, 15.1, 15.2) and a plurality of second battery cell groups (16, 16.1, 16.2); wherein
- at least one of the first battery cell groups (15, 15.1, 15.2) is arranged adjacent to at least one of the second battery cell groups (16, 16.1, 16.2); wherein
- each of the first battery cell groups (15, 15.1, 15.2) and each of the second battery cell groups (16, 16.1, 16.2) comprises a plurality of stacked prismatic battery cells (20, 20.1, 20.2, 20.3, 20.4, 20.5, 20.6, 20.7); wherein
- the first battery cell groups (15, 15.1, 15.2) and second battery cell groups (16, 16.1, 16.2) are alternatingly stacked; and wherein
- the battery cells (20, 20.1, 20.2, 20.3, 20.4, 20.5, 20.6, 20.7) of the first battery cell group (15, 15.1, 15.2) are oriented orthogonally to the battery cells (20, 20.1, 20.2, 20.3, 20.4, 20.5, 20.6, 20.7) of the second battery cell group (16, 16.1, 16.2),
- each of the battery cells (20, 20.1, 20.2, 20.3, 20.4, 20.5, 20.6, 20.7) has a narrow side surface (32, 32.1, 32.2, 32.3, 32.4, 32.5, 32.6, 32.7) and a longitudinal side surface (31), wherein the longitudinal side surfaces correspond to the largest flat surfaces of the battery cells;
**characterized in that**,
- the first battery cell groups (15, 15.1, 15.2) and the second battery cell groups (16, 16.1, 16.2) are arranged so that one battery cell (20, 20.1, 20.2, 20.3, 20.4, 20.5, 20.6, 20.7) of the first battery cell group (15, 15.1, 15.2) is arranged to touch, with its longitudinal side surface (31), a plurality of, or each of, the cells (20, 20.1, 20.2, 20.3, 20.4, 20.5, 20.6, 20.7) of a neighboring second battery cell group (16, 16.1, 16.2) at their narrow side surfaces (32, 32.1, 32.2, 32.3, 32.4, 32.5, 32.6, 32.7).

2. The battery module (12) according to claim 1, wherein
- the first battery cell groups (15, 15.1, 15.2) and the second battery cell groups (16, 16.1, 16.2) are alternatingly stacked in a one-dimensional arrangement.

3. The battery module (12) according to claim 1, wherein
- the first battery cell groups (15, 15.1, 15.2) and the secondary battery cell groups (16, 16.1, 16.2) are arranged on a two-dimensional lattice, wherein
- the lattice comprises lattice sites arranged in at least two rows and at least two columns, wherein
- either one of the first battery cell groups (15, 15.1, 15.2) or one of the second battery cell groups (16, 16.1, 16.2) is arranged on each lattice site.

4. The battery module (12) according to any one of the preceding claims, wherein
- the sum of the areas of the narrow side surfaces (32, 32.1, 32.2, 32.3, 32.4, 32.5, 32.6, 32.7) is less or equal then the area of the longitudinal side surface (31).

5. The battery module (12) according to claim 4, wherein the battery module (12) comprises additional spacers at the end of the cell stacks or between the battery cells 20.1, 20.2, 20.3, 20.4, 20.5, 20.6, 20.7, when the sum of the areas of the narrow side surfaces (32.1, 32.2, 32.3, 32.4, 32.5, 32.6, 32.7) is less than the area of the longitudinal side surface (31).

6. The battery module (12) according to any one of the preceding claims, wherein
- for each of the battery cells (20, 20.1, 20.2, 20.3, 20.4, 20.5, 20.6, 20.7), the elongation of a battery cell (20, 20.1, 20.2, 20.3, 20.4, 20.5, 20.6, 20.7) in a first direction is a integer multiple of the elongation of said battery cell (20, 20.1, 20.2, 20.3, 20.4, 20.5, 20.6, 20.7) in a second direction.

7. The battery module (12) according to any one of the preceding claims, wherein
- each of the battery cells (20, 20.1, 20.2, 20.3, 20.4, 20.5, 20.6, 20.7) has an equal shape, and/or each of the first and second battery cell groups (15, 15.1, 15.2, 16, 16.1, 16.2) has an equal shape with a square cross-section.

8. The battery module (12) according to any one of the preceding claims, wherein
- the number of battery cells (20, 20.1, 20.2, 20.3, 20.4, 20.5, 20.6, 20.7) comprised by each of the first battery cell groups (15, 15.1, 15.2) and the number of battery cells (20, 20.1, 20.2, 20.3, 20.4, 20.5, 20.6, 20.7) comprised by each of the second battery cell groups (16, 16.1, 16.2) equal each other.

9. A battery pack (10), comprising at least one battery module (12) as claimed in any one of the preceding claims.

10. An electric vehicle (300) comprising at least one battery module (12) according to any one of the preceding claims 1 to 9 and/or at least one battery pack (10) according to claim 10.

11. A method for assembly of a battery module (12) as claimed in claim 1, wherein the method comprises the steps of:
a) providing the plurality of first battery cell groups (15, 15.1, 15.2) and the plurality of second battery cell groups (16, 16.1, 16.2)
b) arranging at least one of the first battery cell groups (15, 15.1, 15.2) adjacent to at least one of the second battery cell groups (16, 16.1, 16.2) so that the first battery cell groups (15, 15.1, 15.2) and second battery cell groups (16, 16.1, 16.2) are alternatingly stacked.

## Patentansprüche

1. Batteriemodul (12), umfassend:
- eine Mehrzahl von ersten Batteriezellengruppen (15, 15.1, 15.2) und eine Mehrzahl von zweiten Batteriezellengruppen (16, 16.1, 16.2); wobei
- wenigstens eine von den ersten Batteriezellengruppen (15, 15.1, 15.2) wenigstens einer von den zweiten Batteriezellengruppen (16, 16.1, 16.2) benachbart angeordnet ist; wobei
- jede von den ersten Batteriezellengruppen (15, 15.1, 15.2) und jede von den zweiten Batteriezellengruppen (16, 16.1, 16.2) eine Mehrzahl von gestapelten prismatischen Batteriezellen (20, 20.1, 20.2, 20.3, 20.4, 20.5, 20.6, 20.7) umfasst; wobei
- die ersten Batteriezellengruppen (15, 15.1, 15.2) und die zweiten Batteriezellengruppen (16, 16.1, 16.2) abwechselnd gestapelt sind; und wobei
- die Batteriezellen (20, 20.1, 20.2, 20.3, 20.4, 20.5, 20.6, 20.7) der ersten Batteriezellengruppe (15, 15.1, 15.2) senkrecht zu den Batteriezellen (20, 20.1, 20.2, 20.3, 20.4, 20.5, 20.6, 20.7) der zweiten Batteriezellengruppe (16, 16.1, 16.2) ausgerichtet sind,
- jede von den Batteriezellen (20, 20.1, 20.2, 20.3, 20.4, 20.5, 20.6, 20.7) eine Schmalseitenoberfläche (32, 32.1, 32.2, 32.3, 32.4, 32.5, 32.6, 32.7) und eine Längsseitenoberfläche (31) aufweist, wobei die Längsseitenoberflächen den größten flachen Oberflächen der Batteriezellen entsprechen;
**dadurch gekennzeichnet, dass**
- die ersten Batteriezellengruppen (15, 15.1, 15.2) und die zweiten Batteriezellengruppen (16, 16.1, 16.2) so angeordnet sind, dass eine Batteriezelle (20, 20.1, 20.2, 20.3, 20.4, 20.5, 20.6, 20.7) der ersten Batteriezellengruppe (15, 15.1, 15.2) so angeordnet ist, dass sie mit ihrer Längsseitenoberfläche (31) eine Mehrzahl von oder jede von den Zellen (20, 20.1, 20.2, 20.3, 20.4, 20.5, 20.6, 20.7) einer benachbarten zweiten Batteriezellengruppe (16, 16.1, 16.2) an ihren Schmalseitenoberflächen (32, 32.1, 32.2, 32.3, 32.4, 32.5, 32.6, 32.7) berührt.

2. Batteriemodul (12) nach Anspruch 1, wobei
- die ersten Batteriezellengruppen (15, 15.1, 15.2) und die zweiten Batteriezellengruppen (16, 16.1, 16.2) in einer eindimensionalen Anordnung abwechselnd gestapelt sind.

3. Batteriemodul (12) nach Anspruch 1, wobei
- die ersten Batteriezellengruppen (15, 15.1, 15.2) und die sekundären Batteriezellengruppen (16, 16.1, 16.2) auf einem zweidimensionalen Gitter angeordnet sind, wobei
- das Gitter Gitterplätze umfasst, die in wenigstens zwei Reihen und wenigstens zwei Spalten angeordnet sind, umfasst, wobei
- entweder eine von den ersten Batteriezellengruppen (15, 15.1, 15.2) oder eine von den zweiten Batteriezellengruppen (16, 16.1, 16.2) an jedem Gitterplatz angeordnet ist.

4. Batteriemodul (12) nach einem der vorangehenden Ansprüche, wobei
- die Summe der Flächen der Schmalseitenoberflächen (32, 32.1, 32.2, 32.3, 32.4, 32.5, 32.6, 32.7) kleiner als oder gleich groß wie die Fläche der Längsseitenoberfläche (31) ist.

5. Batteriemodul (12) nach Anspruch 4, wobei das Batteriemodul (12) zusätzliche Abstandhalter am Ende der Zellenstapel oder zwischen den Batteriezellen (20.1, 20.2, 20.3, 20.4, 20.5, 20.6, 20.7) umfasst, wenn die Summe der Flächen der Schmalseitenoberflächen (32.1, 32.2, 32.3, 32.4 32.5, 32.6, 32.7) kleiner als die Fläche der Längsseitenoberfläche (31) ist.

6. Batteriemodul (12) nach einem der vorangehenden Ansprüche, wobei
- für jede der Batteriezellen (20, 20.1, 20.2, 20.3, 20.4, 20.5, 20.6, 20.7) die Ausdehnung einer Batteriezelle (20, 20.1, 20.2, 20.3, 20.4, 20.5, 20.6, 20.7) in einer ersten Richtung ein ganzzahliges Vielfaches der Ausdehnung der Batteriezelle (20, 20.1, 20.2, 20.3, 20.4, 20.5, 20.6, 20.7) in einer zweiten Richtung ist.

7. Batteriemodul (12) nach einem der vorangehenden Ansprüche, wobei
- jede der Batteriezellen (20, 20.1, 20.2, 20.3, 20.4, 20.5, 20.6, 20.7) eine gleiche Form aufweist, und/oder jede von den ersten und zweiten Batteriezellengruppen (15, 15.1, 15.2, 16, 16.1, 16.2) eine gleiche Form mit einem quadratischen Querschnitt aufweist.

8. Batteriemodul (12) nach einem der vorangehenden Ansprüche, wobei
- die Anzahl von Batteriezellen (20, 20.1, 20.2, 20.3, 20.4, 20.5, 20.6, 20.7), die jede der ersten Batteriezellengruppen (15, 15.1, 15.2) umfasst, und die Anzahl von Batteriezellen (20, 20.1, 20.2, 20.3, 20.4, 20.5, 20.6, 20.7), die jede der zweiten Batteriezellengruppen (16, 16.1, 16.2) umfasst, einander gleichen.

9. Batteriepack (10), umfassend wenigstens ein Batteriemodul (12) nach einem der vorangehenden Ansprüche.

10. Elektrofahrzeug (300), umfassend wenigstens ein Batteriemodul (12) nach einem der vorangehenden Ansprüche 1 bis 9 und/oder wenigstens einen Batteriepack (10) nach Anspruch 10.

11. Verfahren zum Zusammenbauen eines Batteriemoduls (12) nach Anspruch 1, wobei das Verfahren die folgenden Schritte umfasst:
a) Bereitstellen der Mehrzahl von ersten Batteriezellengruppen (15, 15.1, 15.2) und der Mehrzahl von zweiten Batteriezellengruppen (16, 16.1, 16.2),
b) Anordnen wenigstens einer der ersten Batteriezellengruppen (15, 15.1, 15.2), sodass sie wenigstens einer der zweiten Batteriezellengruppen (16, 16.1, 16.2) benachbart ist, sodass die ersten Batteriezellengruppen (15, 15.1, 15.2) und zweite Batteriezellengruppen (16, 16.1, 16.2) abwechselnd gestapelt sind.

## Revendications

1. Module batterie (12), comprenant
- une pluralité de premiers groupes d'éléments de batterie (15, 15.1, 15.2) et une pluralité de seconds groupes d'éléments de batterie (16, 16.1, 16.2) ; dans lequel
- au moins l'un des premiers groupes d'éléments de batterie (15, 15.1, 15.2) est agencé de manière adjacente à au moins l'un des seconds groupes d'éléments de batterie (16, 16.1, 16.2) ; dans lequel
- chacun des premiers groupes d'éléments de batterie (15, 15.1, 15.2) et chacun des seconds groupes d'éléments de batterie (16, 16.1, 16.2) comprend une pluralité d'éléments de batterie prismatiques empilés (20, 20.1, 20.2, 20.3, 20.4, 20.5, 20.6, 20.7) ; dans lequel
- les premiers groupes d'éléments de batterie (15, 15.1, 15.2) et les seconds groupes d'éléments de batterie (16, 16.1, 16.2) sont empilés en alternance ; et dans lequel
- les éléments de batterie (20, 20.1, 20.2, 20.3, 20.4, 20.5, 20.6, 20.7) du premier groupe d'éléments de batterie (15, 15.1, 15.2) sont orientés perpendiculairement aux éléments de batterie (20, 20.1, 20.2, 20.3, 20.4, 20.5, 20.6, 20.7) du second groupe d'éléments de batterie (16, 16.1, 16.2),
- chacun des éléments de batterie (20, 20.1, 20.2, 20.3, 20.4, 20.5, 20.6, 20.7) présente une surface latérale étroite (32, 32.1, 32.2, 32.3, 32.4, 32.5, 32.6, 32.7) et une surface latérale longitudinale (31), dans lequel les surfaces latérales longitudinales correspondent aux plus grandes surfaces plates des éléments de batterie ;
**caractérisé en ce que**,
- les premiers groupes d'éléments de batterie (15, 15.1, 15.2) et les seconds groupes d'éléments de batterie (16, 16.1, 16.2) sont agencés de sorte qu'un élément de batterie (20, 20.1, 20.2, 20.3, 20.4, 20.5, 20.6, 20.7) du premier groupe d'éléments de batterie (15, 15.1, 15.2) soit agencé pour toucher, avec sa surface latérale longitudinale (31), une pluralité, ou chacun, des éléments (20, 20.1, 20.2, 20.3, 20.4, 20.5, 20.6, 20.7) d'un second groupe d'éléments de batterie (16, 16.1, 16.2) voisin au niveau de leurs surfaces latérales étroites (32, 32.1, 32.2, 32.3, 32.4, 32.5, 32.6, 32.7).

2. Module batterie (12) selon la revendication 1, dans lequel
- les premiers groupes d'éléments de batterie (15, 15.1, 15.2) et les seconds groupes d'éléments de batterie (16, 16.1, 16.2) sont empilés en alternance en un agencement unidimensionnel.

3. Module batterie (12) selon la revendication 1, dans lequel
- les premiers groupes d'éléments de batterie (15, 15.1, 15.2) et les groupes d'éléments de batterie secondaires (16, 16.1, 16.2) sont agencés sur un réseau bidimensionnel, dans lequel
- le réseau comprend des sites réticulaires agencés en au moins deux rangées et au moins deux colonnes, dans lequel
- soit l'un des premiers groupes d'éléments de batterie (15, 15.1, 15.2), soit l'un des seconds groupes d'éléments de batterie (16, 16.1, 16.2) est agencé sur chaque site réticulaire.

4. Module batterie (12) selon l'une quelconque des revendications précédentes, dans lequel
- la somme des aires des surfaces latérales étroites (32, 32.1, 32.2, 32.3, 32.4, 32.5, 32.6, 32.7) est inférieure ou égale à l'aire de la surface latérale longitudinale (31).

5. Module batterie (12) selon la revendication 4, dans lequel le module batterie (12) comprend des espaceurs supplémentaires à l'extrémité des piles d'éléments ou entre les éléments de batterie 20, 20.1, 20.2, 20.3, 20.4, 20.5, 20.6, 20.7,
lorsque la somme des aires des surfaces latérales étroites (32.1, 32.2, 32.3, 32.4, 32.5, 32.6, 32.7) est inférieure à l'aire de la surface latérale longitudinale (31).

6. Module batterie (12) selon l'une quelconque des revendications précédentes, dans lequel
- pour chacun des éléments de batterie (20, 20.1, 20.2, 20.3, 20.4, 20.5, 20.6, 20.7), l'allongement d'un élément de batterie (20, 20.1, 20.2, 20.3, 20.4, 20.5, 20.6, 20.7) dans une première direction est un multiple entier de l'allongement dudit élément de batterie (20, 20.1, 20.2, 20.3, 20.4, 20.5, 20.6, 20.7) dans une seconde direction.

7. Module batterie (12) selon l'une quelconque des revendications précédentes, dans lequel
- chacun des éléments de batterie (20, 20.1, 20.2, 20.3, 20.4, 20.5, 20.6, 20.7) présente une forme identique, et/ou chacun des premiers et seconds groupes d'éléments de batterie (15, 15.1, 15.2, 16, 16.1, 16.2) présente une forme identique avec une section transversale carrée.

8. Module batterie (12) selon l'une quelconque des revendications précédentes, dans lequel
- le nombre d'éléments de batterie (20, 20.1, 20.2, 20.3, 20.4, 20.5, 20.6, 20.7) compris par chacun des premiers groupes d'éléments de batterie (15, 15.1, 15.2) et le nombre d'éléments de batterie (20, 20.1, 20.2, 20.3, 20.4, 20.5, 20.6, 20.7) compris par chacun des seconds groupes d'éléments de batterie (16, 16.1, 16.2) sont équivalents.

9. Bloc-batterie (10), comprenant au moins un module batterie (12) selon l'une quelconque des revendications précédentes.

10. Véhicule électrique (300) comprenant au moins un module batterie (12) selon l'une quelconque des revendications 1 à 9 et/ou au moins un bloc-batterie (10) selon la revendication 10.

11. Procédé d'assemblage d'un module batterie (12) selon la revendication 1, dans lequel le procédé comprend les étapes de :
a) fourniture de la pluralité de premiers groupes d'éléments de batterie (15, 15.1, 15.2) et de la pluralité de seconds groupes d'éléments de batterie (16, 16.1, 16.2)
b) l'agencement d'au moins l'un des premiers groupes d'éléments de batterie (15, 15.1, 15.2) de manière adjacente à au moins l'un des seconds groupes d'éléments de batterie (16, 16.1, 16.2) de sorte que les premiers groupes d'éléments de batterie (15, 15.1, 15.2) et les seconds groupes d'éléments de batterie (16, 16.1, 16.2) soient empilés en alternance.
